# EUROPEAN PATENT SPECIFICATION

(11) **EP 2 506 360 B1**
(45) Date of publication and mention of the grant of the patent: **18.06.2014**
(21) Application number: 12162506.5
(22) Date of filing: 30.03.2012
(51) Int. Cl.: H01M 10/60, H01M 10/48, H01M 2/10, H01M 10/42

(54) **Battery pack having liquid leak detection system**
Batteriepack mit Flüssigkeitsleckerkennungssystem
Bloc-batterie équipé d'un système de détection de fuite de liquide

(30) Priority: 31.03.2011 US 201113076774
(43) Date of publication of application: 03.10.2012
(73) Proprietor: LG CHEM, LTD., Seoul 150-721 (KR)
(72) Inventor: Payne, Josh, Royal Oak, MI 48073 (US); Daniel, Vaughan, Ann Arbor, MI 48108 (US)
(74) Representative: HOFFMANN EITLE

(56) References cited:
- GB-A- 776 240
- GB-A- 2 442 015
- US-A- 4 503 710

## Description

### BACKGROUND

Battery packs have been developed that receive a liquid for cooling the battery packs. The inventor herein has recognized that it would be desirable to detect liquid leaking from the battery pack if such a leak occurs.

GB 776240 A discloses in combination the technical features of the pre-characterizing part of claims 1 and 11 below.

GB 2442015 A relates to a liquid leak detection system comprising a sensor mat. The sensor mat basically consists of three layers, a top and a middle layer of water permeable material and an electrically insulating base layer.

### SUMMARY

Aspects of the present invention are defined in claims 1, 6 and 11 below. The dependent claims are directed to optional and preferred features.

A battery pack in accordance with an exemplary embodiment is provided. The battery pack is defined in claim 1 below and includes at least one battery module configured to receive a liquid therein for cooling the battery module. The battery pack further includes a liquid leak detection system disposed adjacent to the at least one battery module. The liquid leak detection system includes first and second electrically conductive wire grids, and an open-cell foam layer having a first side and a second side. The first electrically conductive wire grid is disposed on the first side, and the second electrically conductive wire grid is disposed on the second side. The open-cell foam layer has a predetermined thickness to allow at least a portion of the liquid contacting the open- cell foam layer to migrate from the first side to the second side. The liquid leak detection system further includes an insulating mat disposed between the second electrically conductive wire grid and a tray. The tray is configured to hold the insulating mat, the open-cell foam layer, and the first and second electrically conductive wire grids therein. The liquid leak detection system further includes a resistance measuring device configured to output a first signal indicative of a resistance level between the first and second electrically conductive wire grids. The liquid leak detection system further includes a microprocessor configured to compare an amplitude of the first signal to a threshold value. The microprocessor is further configured to output a second signal if the comparison of the amplitude of the first signal and the threshold value indicates that the liquid is detected.

A liquid leak detection system in accordance with another exemplary embodiment is provided. The liquid leak detection system is defined in claim 6 below and includes first and second electrically conductive wire grids. The liquid leak detection system further includes an open-cell foam layer having a first side and a second side. The first electrically conductive wire grid disposed on the first side, and the second electrically conductive wire grid is disposed on the second side. The open-cell foam layer has a predetermined thickness to allow at least a portion of liquid contacting the open-cell foam layer to migrate from the first side to the second side. The liquid leak detection system further includes an insulating mat disposed between the second electrically conductive wire grid and a tray. The tray is configured to hold the insulating mat, the open-cell foam layer, and the first and second electrically conductive wire grids therein. The liquid leak detection system further includes a resistance measuring device configured to output a first signal indicative of a resistance level between the first and second electrically conductive wire grids. The liquid leak detection system further includes a microprocessor configured to compare an amplitude of the first signal to a threshold value. The microprocessor is further configured to output a second signal if the comparison of the amplitude of the first signal and the threshold value indicates that the liquid is detected.

A method for manufacturing a battery pack in accordance with another exemplary embodiment is provided. The method is defined in claim 11 below and includes disposing an insulating mat in a tray. The method further includes disposing a first electrically conductive wire grid on the insulating mat. The method further includes disposing an open-cell foam layer on the first electrically conductive wire grid. The method further includes disposing a second electrically conductive wire grid on the open-cell foam layer. The open-cell foam layer has a predetermined thickness to allow at least a portion of a liquid contacting the open-cell foam layer to migrate from the first side to the second side. The method further includes coupling the first and second electrically conductive wire grids to a resistance measuring device configured to output a first signal indicative of a resistance level between the first and second electrically conductive wire grids. The method further includes disposing at least one battery module on the first electrically conductive wire grid. The at least one battery module is configured to receive liquid therein for cooling the battery module.

### BRIEF DESCRIPTION OF THE DRAWINGS

FIG. 1 is a schematic of a battery pack in accordance with an exemplary embodiment;
FIG. 2 is a schematic of a liquid leak detection system utilized in the battery pack of

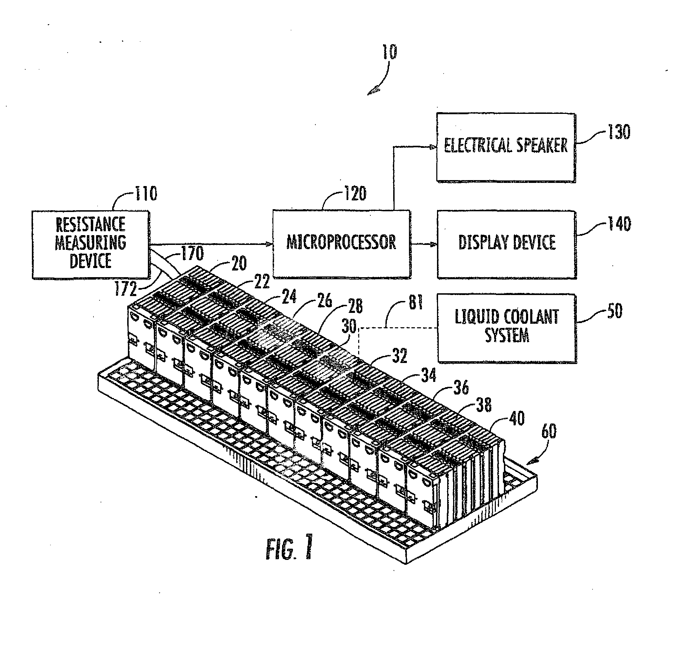

FIG. 1 in accordance with another exemplary embodiment;

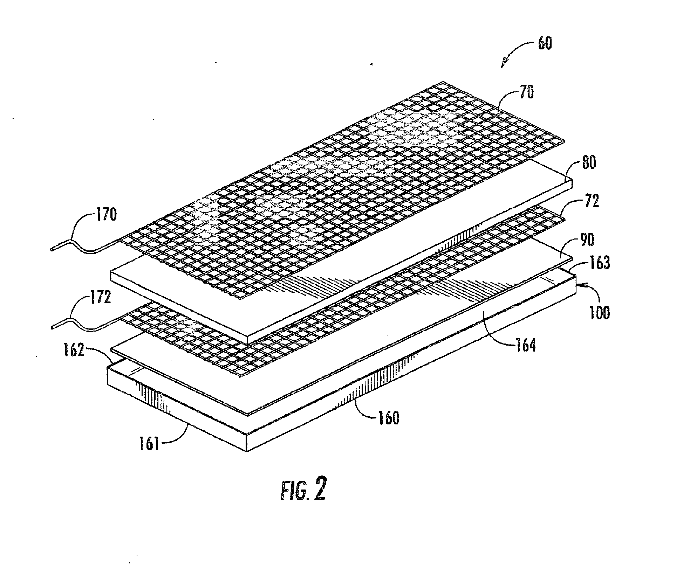

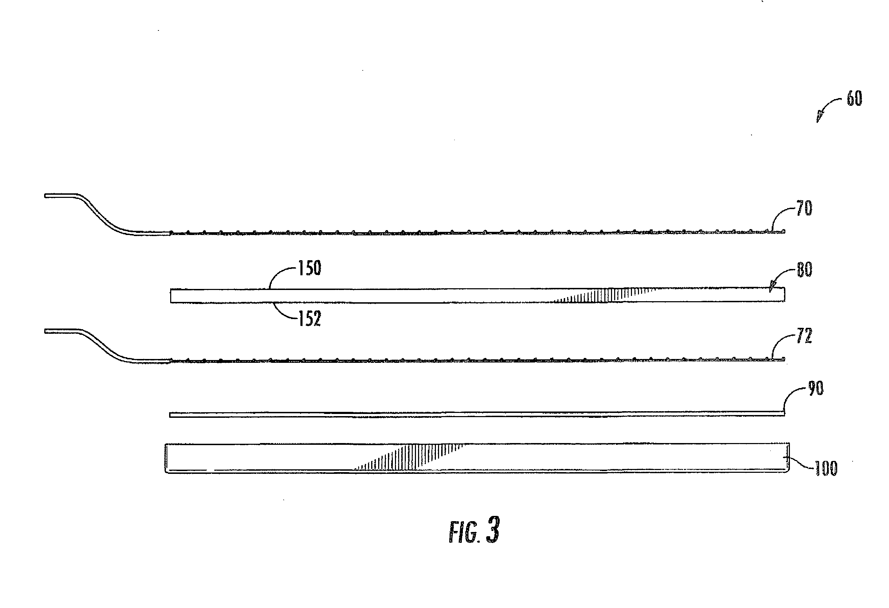

FIG. 3 is an exploded view of the liquid leak detection system of FIG. 2;

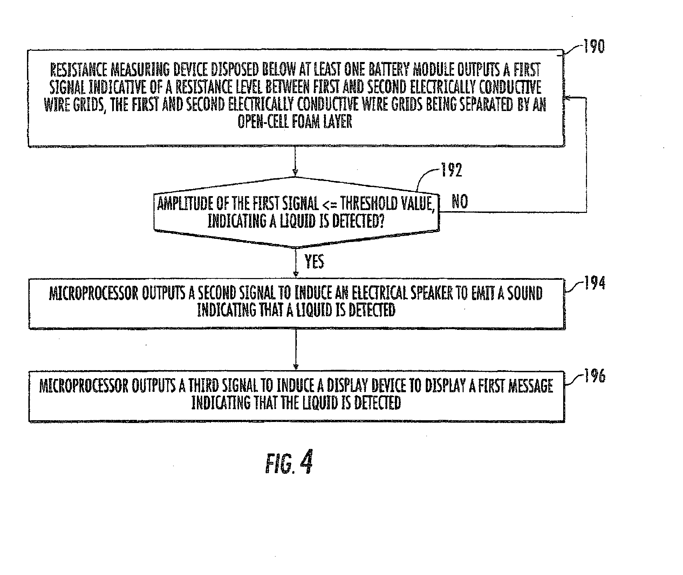

FIG. 4 is a flowchart of a method for detecting a liquid utilizing the liquid leak detection system of FIG. 2 in accordance with another exemplary embodiment;

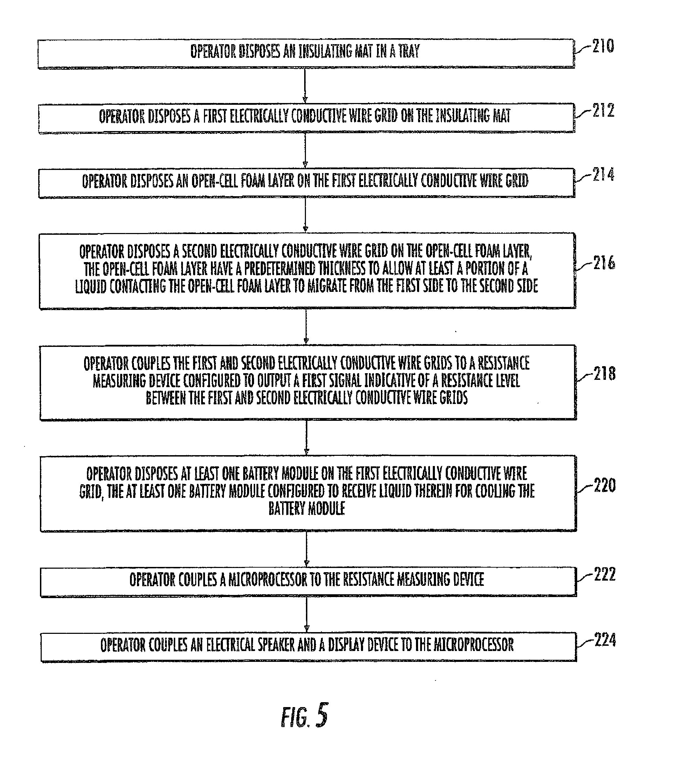

FIG. 5 is a flowchart of a method for manufacturing the battery pack of FIG. 1 in accordance with another exemplary embodiment; and

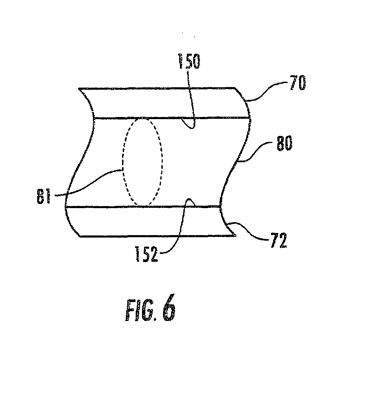

FIG. 6 is a cross-sectional schematic of a portion of the leak detection system of FIG. 1.

### DETAILED DESCRIPTION

Referring to FIG. 1, a battery pack 10 having a liquid detection system 60 in accordance with an exemplary embodiment is provided. The battery pack 10 includes battery modules 20, 22, 24, 26, 28, 30, 32, 34, 36, 38, 40, a liquid coolant system 50, and the liquid detection system 60.

The liquid coolant system 50 is configured to provide a liquid 81 to the battery modules 20-40 for cooling the battery modules 20-40.

The liquid leak detection system 60 is configured to detect when a portion of the liquid 81 has leaked from the battery modules 20-40. Referring to Figs. 1 to 3 and 6, the liquid detection system 60 includes electrically conductive wire grids 70, 72, an open cell foam layer 80, an insulating mat 90, a tray 100, a resistance measuring device 110, a microprocessor 120, an electrical speaker 130, and a display device 140.

The electrically conductive wire grid 70 has a generally rectangular shape and is constructed of an electrically conductive material. In one exemplary embodiment, the electrically conductive wire grid 70 is constructed of copper. Of course, in alternative embodiments, the electrically conductive wire grid 70 could be constructed of other metals or metal alloys known to those skilled in the art. Also, in alternative embodiments, the shape of the electrically conductive wire grid 70 could vary based upon a desired application. As shown, the battery modules 20-40 are disposed on a top portion of the electrically conductive wire grid 70.

The open-cell foam layer 80 is disposed between the electrically conductive wire grids 70, 72. The open-cell foam layer 80 has a first side 150 and a second side 152. The electrically conductive wire grid 70 is disposed on the first side 150, and the electrically conductive wire grid 72 is disposed on the second side 152. The open-cell foam layer 80 has a predetermined thickness to allow at least a portion of the liquid 81 contacting the open-cell foam layer 80 to migrate from the first side 150 to the second side 152. Also, the open cell foam layer 80 has a rectangular shape and defines an area substantially equal to an area of each of the electrically conductive wire grids 70, 72.

The electrically conductive wire grid 72 has a generally rectangular shape and is constructed of an electrically conductive material. In one exemplary embodiment, the electrically conductive wire grid 72 is constructed of copper. Of course, in alternative embodiments, the electrically conductive wire grid 72 could be constructed of other metals or metal alloys known to those skilled in the art. Also, in alternative embodiments, the shape of the electrically conductive wire grid 72 could vary based upon a desired application. As shown, the electrically conductive wire grid 72 is disposed between the open-cell foam layer 80 and the insulating mat 90.

The insulating mat 90 is disposed between the electrically conductive wire grid 72 and the tray 100. In one exemplary embodiment, the insulating mat 90 is constructed of a rubber compound. Of course, in an alternative embodiment, the insulating mat 90 could be constructed of other non-electrically conductive materials known to those skilled in the art.

The tray 100 is configured to hold the insulating mat 90, the open-cell foam layer 80, and the electrically conductive wire grids 70, 72 therein. The tray 100 has side walls 160, 161, 162, 163 coupled to a base plate 164. A height of each of the side walls 160, 161,162, 163 is at least equal to or greater than a height of a stacked assembly of the insulating matt 90, the open-cell foam layer 80, and the electrically conductive wire grids 70, 72. In one exemplary embodiment, the tray 100 is constructed of plastic.

The resistance measuring device 110 is electrically coupled to the electrically conductive wire grids 70, 72 utilizing the electrical conductors 170, 172, respectively. The resistance measuring device 110 is configured to output a first signal indicative of a resistance level between the electrically conductive wire grids 170, 172. When at least a predetermined amount of liquid 81 flows through apertures in the electrically conductive wire grid 70, the liquid 81 propagates through the open-cell foam layer 80 to the electrically conductive wire grid 72 and forms a conductive path between the grids 70, 72. Thus, when the liquid 81 flows through apertures in the electrically conductive wire grid 70 and propagates through the open-cell foam layer 80 to the electrically conductive wire grid 72, a resistance level between the grids 70, 72 is reduced to a resistance level less than or equal to a threshold resistance value. Otherwise, when the open-cell foam layer is dry, a resistance level between the grids 70, 72 is greater than the threshold resistance value. The threshold resistance value is an empirically determined value. In one exemplary embodiment, however, the threshold resistance value could be in a range of 1-1000 Ohms for example.

The microprocessor 120 is operably coupled to the resistance measuring device 110, an electrical speaker 130, and a display device 140. The microprocessor 120 monitors an output signal from the resistance measuring device 110 to detect a liquid 81 as will be explained in greater detail below.

Referring to FIGS. 1, 2 and 4, a flowchart of a method for detecting a liquid 81 leaking from a battery module in accordance with another exemplary embodiment will now be explained.

At step 190, the resistance measuring device 110 that is disposed below at least one battery module outputs a first signal indicative of a resistance level between electrically conductive wire grids 70, 72. The electrically conductive wire grids 70, 72 are separated by the open-cell foam layer 80.

At step 192, the microprocessor 120 makes a determination as to whether an amplitude of the first signal is less than or equal to a threshold value, indicating a liquid 81 is detected. If the value of step 192 equals "yes", the method advances to step 194. Otherwise, the method returns to step 190.

At step 194, the microprocessor 120 outputs a second signal to induce the electrical speaker 130 to emit a sound indicating that a liquid 81 is detected.

At step 196, the microprocessor 120 outputs a third signal to induce the display device 140 to display a first message indicating that the liquid 81 is detected.

Referring to FIGS. 1, 2 and 5, a flowchart of a method for manufacturing the battery pack 10 in accordance with another exemplary embodiment will now be explained.

At step 210, an operator disposes the insulating mat 90 in the tray 100.

At step 212, the operator disposes the electrically conductive wire grid 72 on the insulating mat 90.

At step 214, the operator disposes the open-cell foam layer 80 on the electrically conductive wire grid 72.

At step 216, the operator disposes the electrically conductive wire grid 70 on the open-cell foam layer 80. The open-cell foam layer 80 has a predetermined thickness to allow at least a portion of the liquid 81 contacting the open-cell foam layer 80 to migrate from the first side 150 to the second side 152.

At step 218, the operator couples the electrically conductive wire grids 70, 72 to the resistance measuring device 110 which is configured to output a first signal indicative of a resistance level between the electrically conductive wire grids 70, 72.

At step 220, the operator disposes at least one battery module on the electrically conductive wire grid 70. The at least one battery module is configured to receive liquid 81 therein for cooling the battery module.

At step 222, the operator couples the microprocessor 120 to the resistance measuring device 110.

At step 224, the operator couples the electrical speaker 130 and the display device 140 to the microprocessor 120.

The battery pack 10 and the liquid detection system 60 provide a substantial advantage over other battery packs and liquid detection systems. In particular, the liquid detection system 60 provides a technical effect of detecting liquid leaking from a battery module utilizing a pair of electrically conductive wire grids separated by an open-cell foam layer.

## Claims

1. A battery pack (10), comprising:
at least one battery module configured to receive a liquid therein for cooling the battery module; and **characterized by**
a liquid leak detection system (60) disposed adjacent to the at least one battery module, the liquid leak detection system comprising:
first and second electrically conductive wire grids (70, 72), the first and second electrically conductive wire grids being constructed of a first metal;
an open-cell foam layer (80) having a first side and a second side, the first electrically conductive wire grid disposed on the first side, the second electrically conductive wire grid disposed on the second side, the open-cell foam layer has a predetermined thickness to allow at least a portion of the liquid contacting the open-cell foam layer to migrate from the first side to the second side;
an insulating mat (90) disposed between the second electrically conductive wire grid and a tray (100), the insulating mat being a solid insulating mat constructed of a rubber compound, the tray being configured to hold the insulating mat, the open-cell foam layer, and the first and second electrically conductive wire grids therein;
a resistance measuring device (110) configured to output a first signal indicative of a resistance level between the first and second electrically conductive wire grids; and
a microprocessor (120) configured to compare an amplitude of the first signal to a threshold value, the microprocessor further configured to output a second signal if the comparison of the amplitude of the first signal and the threshold value indicates that the liquid is detected.

2. The battery pack of claim 1, wherein the comparison of the amplitude of the first signal and the threshold value indicates that the liquid is detected if the amplitude of the first signal is less than or equal to the threshold value.

3. The battery pack of claim 1, wherein the liquid leak detection system further comprises an electrical speaker configured to emit a sound indicating that the liquid is detected in response to receiving the second signal.

4. The battery pack of claim 1, wherein the microprocessor of the liquid leak detection system is further configured to induce a display device to display a first message indicating that the liquid is detected if the comparison of the amplitude of the first signal and the threshold value indicates that the liquid is detected.

5. The battery pack of claim 1, wherein the open-cell foam layer is an open-cell polyurethane foam layer.

6. A liquid leak detection system (60), comprising:
first and second electrically conductive wire grids (70, 72), the first and second electrically conductive wire grids being constructed of a first metal;
an open-cell foam layer having (80) a first side and a second side, the first electrically conductive wire grid disposed on the first side, the second electrically conductive wire grid disposed on the second side, the open-cell foam layer has a predetermined thickness to allow at least a portion of liquid contacting the open-cell foam layer to migrate from the first side to the second side;
an insulating mat (90) disposed between the second electrically conductive wire grid and a tray (100), the insulating mat being a solid insulating mat constructed of a rubber compound, the tray being configured to hold the insulating mat, the open-cell foam layer, and the first and second electrically conductive wire grids therein;
a resistance measuring device (110) configured to output a first signal indicative of a resistance level between the first and second electrically conductive wire grids; and
a microprocessor (120) configured to compare an amplitude of the first signal to a threshold value, the microprocessor further configured to output a second signal if the comparison of the amplitude of the first signal and the threshold value indicates that the liquid is detected.

7. The liquid leak detection system of claim 6, wherein the comparison of the amplitude of the first signal and the threshold value indicates that the liquid is detected if the amplitude of the first signal is less than or equal to the threshold value.

8. The liquid leak detection system of claim 6, further comprising an electrical speaker configured to emit a sound indicating that the liquid is detected in response to receiving the second signal.

9. The liquid leak detection system of claim 6, wherein the microprocessor is further configured to induce a display device to display a first message indicating that the liquid is detected if the comparison of the amplitude of the first signal and the threshold value indicates that the liquid is detected.

10. The liquid leak detection system of claim 6, wherein the open-cell foam layer is an open-cell polyurethane foam layer.

11. A method for manufacturing a battery pack (10), **characterized by** comprising:
disposing an insulating mat (90) in a tray (100), the insulating mat being a solid insulating mat constructed of a rubber compound;
disposing a first electrically conductive wire grid (72) on the insulating mat, the first electrically conductive wire grid being constructed of a first metal;
disposing an open-cell foam layer (80) on the first electrically conductive wire grid;
disposing a second electrically conductive wire grid (70) on the open-cell foam layer, the second electrically conductive wire grid being constructed of the first metal, the open-cell foam layer has a predetermined thickness to allow at least a portion of a liquid contacting the open-cell foam layer to migrate from the first side to the second side;
coupling the first and second electrically conductive wire grids to a resistance measuring device (110) configured to output a first signal indicative of a resistance level between the first and second electrically conductive wire grids; and
disposing at least one battery module on the first electrically conductive wire grid, the at least one battery module configured to receive liquid therein for cooling the battery module.

12. The method of claim 11, further comprising coupling a microprocessor to the resistance measuring device.

13. The battery pack of claim 1, wherein the first metal is copper.

14. The battery pack of claim 1, wherein the open-cell foam layer has a rectangular shape and defines an area substantially equal to an area of each of the first and second electrically conductive wire grids.

15. The liquid leak detection system of claim 6, wherein the first metal is copper.

16. The liquid leak detection system of claim 6, wherein the open-cell foam layer has a rectangular shape and defines an area substantially equal to an area of each of the first and second electrically conductive wire grids.

17. The method of claim 11, wherein the first metal is copper.

18. The method of claim 11, wherein the open-cell foam layer has a rectangular shape and defines an area substantially equal to an area of each of the first and second electrically conductive wire grids.

## Patentansprüche

1. Batteriepaket (10) mit:
zumindest einem Batteriemodul, das derart ausgelegt ist, dass es darin eine Flüssigkeit aufnimmt, um das Batteriemodul zu kühlen; und **gekennzeichnet durch**
ein Flüssigkeits-Leck-Erfassungssystem (60), das angrenzend an das zumindest eine Batteriemodul angeordnet ist, wobei das Flüssigkeits-Leck-Erfassungssystem aufweist:
erste und zweite, elektrisch leitfähige Drahtgitter (70, 72), wobei die ersten und zweiten, elektrisch leitfähigen Drahtgitter aus einem ersten Metall gebildet sind;
eine offenzellige Schaumschicht (80) mit einer ersten Seite und einer zweiten Seite, wobei das erste, elektrisch leitfähige Drahtgitter auf der ersten Seite angeordnet ist, das zweite, elektrisch leitfähige Drahtgitter auf der zweiten Seite angeordnet ist, und die offenzellige Schaumschicht eine vorbestimmte Dicke aufweist, um es zumindest einem Abschnitt der Flüssigkeit, der mit der offenzelligen Schaumschicht in Kontakt ist, zu ermöglichen, von der ersten Seite zur zweiten Seite zu migrieren;
eine Isolationsmatte (90), die zwischen dem zweiten, elektrisch leitfähigen Drahtgitter und einer Wanne (100) angeordnet ist, wobei die Isolationsmatte eine feste Isolationsmatte ist, die aus einer Gummiverbindung gebildet ist, und die Wanne ausgelegt ist, darin die Isolationsmatte, die offenzellige Schaumschicht und die ersten und zweiten, elektrisch leitfähigen Drahtgitter zu halten;
eine Widerstandsmesseinrichtung (110), die ausgelegt ist, ein erstes Signal auszugeben, das für ein Widerstandsniveau zwischen den ersten und zweiten, elektrisch leitfähigen Drahtgittern kennzeichnend ist, und
einen Mikroprozessor (120), der derart ausgelegt ist, dass er eine Amplitude des ersten Signals mit einem Schwellwert vergleicht, wobei der Mikroprozessor ferner ausgelegt ist, ein zweites Signal auszugeben, falls der Vergleich der Amplitude des ersten Signals und des Schwellwerts anzeigt, dass die Flüssigkeit erfasst ist.

2. Batteriepaket nach Anspruch 1, bei dem der Vergleich der Amplitude des ersten Signals und des Schwellwerts anzeigt, dass die Flüssigkeit erfasst ist, falls die Amplitude des ersten Signals kleiner als der Schwellwert oder gleich dem Schwellwert ist.

3. Batteriepaket nach Anspruch 1, bei dem das Flüssigkeits-Leck-Erfassungssystem ferner einen elektrischen Lautsprecher aufweist, der ausgelegt ist, als Reaktion auf das Empfangen des zweiten Signals ein Geräusch abzugeben, das anzeigt, dass die Flüssigkeit erfasst ist.

4. Batteriepaket nach Anspruch 1, bei dem der Mikroprozessor des Flüssigkeits-Leck-Erfassungssystems ferner ausgelegt ist, eine Anzeigenvorrichtung dazu zu veranlassen, eine erste Nachricht darzustellen, die anzeigt, dass die Flüssigkeit erfasst ist, falls der Vergleich der Amplitude des ersten Signals und des Schwellwerts anzeigt, dass die Flüssigkeit erfasst ist.

5. Batteriepaket nach Anspruch 1, bei dem die offenzellige Schaumschicht eine offenzellige Polyurethan-Schaumschicht ist.

6. Flüssigkeits-Leck-Erfassungssystem (60) mit:
ersten und zweiten, elektrisch leitfähigen Drahtgittern (70, 72), wobei die ersten und zweiten, elektrisch leitfähigen Drahtgitter aus einem ersten Metall gebildet sind;
einer offenzelligen Schaumschicht (80) mit einer ersten Seite und einer zweiten Seite, wobei das erste, elektrisch leitfähige Drahtgitter auf der ersten Seite angeordnet ist, das zweite, elektrisch leitfähige Drahtgitter auf der zweiten Seite angeordnet ist, und die offenzellige Schaumschicht eine vorbestimmte Dicke aufweist, um es zumindest einem Abschnitt der Flüssigkeit, der mit der offenzelligen Schaumschicht in Kontakt ist, zu ermöglichen, von der ersten Seite zur zweiten Seite zu migrieren;
einer Isolationsmatte (90), die zwischen dem zweiten, elektrisch leitfähigen Drahtgitter und einer Wanne (100) angeordnet ist, wobei die Isolationsmatte eine feste Isolationsmatte ist, die aus einer Gummiverbindung gebildet ist, und die Wanne ausgelegt ist, darin die Isolationsmatte, die offenzellige Schaumschicht und die ersten und zweiten, elektrisch leitfähigen Drahtgitter zu halten;
einer Widerstandsmesseinrichtung (110), die ausgelegt ist, ein erstes Signal auszugeben, das für ein Widerstandsniveau zwischen den ersten und zweiten, elektrisch leitfähigen Drahtgittern kennzeichnend ist, und
einem Mikroprozessor (120), der derart ausgelegt ist, dass er eine Amplitude des ersten Signals mit einem Schwellwert vergleicht, wobei der Mikroprozessor ferner ausgelegt ist, ein zweites Signal auszugeben, falls der Vergleich der Amplitude des ersten Signals und des Schwellwerts anzeigt, dass die Flüssigkeit erfasst ist.

7. Flüssigkeits-Leck-Erfassungssystem nach Anspruch 6, bei dem der Vergleich der Amplitude des ersten Signals und des Schwellwerts anzeigt, dass die Flüssigkeit erfasst ist, falls die Amplitude des ersten Signals kleiner als der Schwellwert oder gleich dem Schwellwert ist.

8. Flüssigkeits-Leck-Erfassungssystem nach Anspruch 6, das ferner einen elektrischen Lautsprecher aufweist, der ausgelegt ist, als Reaktion auf das Empfangen des zweiten Signals ein Geräusch abzugeben, das anzeigt, dass die Flüssigkeit erfasst ist.

9. Flüssigkeits-Leck-Erfassungssystem nach Anspruch 6, bei dem der Mikroprozessor ferner ausgelegt ist, eine Anzeigenvorrichtung dazu zu veranlassen, eine erste Nachricht darzustellen, die anzeigt, dass die Flüssigkeit erfasst ist, falls der Vergleich der Amplitude des ersten Signals und des Schwellwerts anzeigt, dass die Flüssigkeit erfasst ist.

10. Flüssigkeits-Leck-Erfassungssystem nach Anspruch 6, bei dem die offenzellige Schaumschicht eine offenzellige Polyurethan-Schaumschicht ist.

11. Herstellungsverfahren für ein Batteriepaket (10), welches **dadurch gekennzeichnet ist, dass** es aufweist:
Anordnen einer Isolationsmatte (90) in einer Wanne (100), wobei die Isolationsmatte eine feste Isolationsmatte ist, die aus einer Gummiverbindung gebildet ist;
Anordnen eines ersten, elektrisch leitfähigen Drahtgitters (72) auf der Isolationsmatte, wobei das erste, elektrisch leitfähige Drahtgitter aus einem ersten Metall gebildet ist;
Anordnen einer offenzelligen Schaumschicht (80) auf dem ersten, elektrisch leitfähigen Drahtgitter;
Anordnen eines zweiten, elektrisch leitfähigen Drahtgitters (70) auf der offenzelligen Schaumschicht, wobei das zweite, elektrisch leitfähige Drahtgitter aus dem ersten Metall gebildet ist, und die offenzellige Schaumschicht eine vorbestimmte Dicke aufweist, um es zumindest einem Abschnitt einer Flüssigkeit, der mit der offenzelligen Schaumschicht in Kontakt ist, zu ermöglichen, von der ersten Seite zur zweiten Seite zu migrieren;
Verbinden der ersten und zweiten, elektrisch leitfähigen Drahtgitter mit einer Widerstandsmesseinrichtung (110), die ausgelegt ist, ein erstes Signal auszugeben, das für ein Widerstandsniveau zwischen den ersten und zweiten, elektrisch leitfähigen Drahtgittern kennzeichnend ist; und
Anordnen zumindest eines Batteriemoduls auf dem ersten, elektrisch leitfähigen Drahtgitter, wobei das zumindest eine Batteriemodul derart ausgelegt ist, dass es darin Flüssigkeit aufnimmt, um das Batteriemodul zu kühlen.

12. Verfahren nach Anspruch 11, das ferner Verbinden eines Mikroprozessors mit der Widerstandsmesseinrichtung aufweist.

13. Batteriepaket nach Anspruch 1, bei dem das erste Metall Kupfer ist.

14. Batteriepaket nach Anspruch 1, bei dem die offenzellige Schaumschicht eine rechteckige Form aufweist und eine Fläche definiert, die im Wesentlichen gleich einer Fläche jeder der ersten und zweiten, elektrisch leitfähigen Drahtgitter ist.

15. Flüssigkeits-Leck-Erfassungssystem nach Anspruch 6, bei dem das erste Metall Kupfer ist.

16. Flüssigkeits-Leck-Erfassungssystem nach Anspruch 6, bei dem die offenzellige Schaumschicht eine rechteckige Form aufweist und eine Fläche definiert, die im Wesentlichen gleich einer Fläche jeder der ersten und zweiten, elektrisch leitfähigen Drahtgitter ist.

17. Verfahren nach Anspruch 11, bei dem das erste Metall Kupfer ist.

18. Verfahren nach Anspruch 11, bei dem die offenzellige Schaumschicht eine rechteckige Form aufweist und eine Fläche definiert, die im Wesentlichen gleich einer Fläche jeder der ersten und zweiten, elektrisch leitfähigen Drahtgitter ist.

## Revendications

1. Bloc-batterie (10), comprenant :
au moins un module de batterie configuré pour y recevoir un liquide afin de refroidir le module de batterie ; et **caractérisé par**
un système de détection de fuite de liquide (60) disposé de manière adjacente à l'au moins un module de batterie, le système de détection de fuite de liquide, comprenant ;
des première et deuxième grilles de fils électriquement conductrices (70, 72), les première et deuxième grilles de fils électriquement conductrices étant constituées d'un premier métal ;
une couche de mousse à cellules ouvertes (80) ayant un premier côté et un deuxième côté, la première grille de fils électriquement conductrice étant disposée sur le premier côté, la deuxième grille de fils électriquement conductrice étant disposée sur le deuxième côté, la couche de mousse à cellules ouvertes a une épaisseur prédéterminée pour permettre à au moins une partie du liquide en contact avec la couche de mousse à cellules ouvertes de migrer du premier côté vers le deuxième côté ;
un tapis isolant (90) disposé entre la deuxième grille de fils électriquement conductrice et un plateau (100), le tapis isolant étant un tapis isolant solide constitué d'un composé de caoutchouc, le plateau étant configuré pour y maintenir le tapis isolant, la couche de mousse à cellules ouvertes, et les première et deuxième grilles de fils électriquement conductrices ;
un dispositif de mesure de résistance (110) configuré pour délivrer en sortie un premier signal qui indique un niveau de résistance entre les première et deuxième grilles de fils électriquement conductrices ; et
un microprocesseur (120) configuré pour comparer une amplitude du premier signal à une valeur seuil, le microprocesseur étant en outre configuré pour délivrer en sortie un deuxième signal si la comparaison entre l'amplitude du premier signal et la valeur seuil indique que le liquide est détecté.

2. Bloc-batterie de la revendication 1, dans lequel la comparaison entre l'amplitude du premier signal et la valeur seuil indique que le liquide est détecté si l'amplitude du premier signal est inférieure ou égale à la valeur seuil.

3. Bloc-batterie de la revendication 1, dans lequel le système de détection de fuite de liquide comprend en outre un haut-parleur électrique configuré pour émettre un son indiquant que le liquide est détecté en réponse à la réception du deuxième signal.

4. Bloc-batterie de la revendication 1, dans lequel le microprocesseur du système de détection de fuite de liquide est en outre configuré pour amener un dispositif d'affichage à afficher un premier message indiquant que le liquide est détecté si la comparaison entre l'amplitude du premier signal et la valeur seuil indique que le liquide est détecté.

5. Bloc-batterie de la revendication 1, dans lequel la couche de mousse à cellules ouvertes est une couche de mousse de polyuréthane à cellules ouvertes.

6. Système de détection de fuite de liquide (60), comprenant :
des première et deuxième grilles de fils électriquement conductrices (70, 72), les première et deuxième grilles de fils électriquement conductrices étant constituées d'un premier métal ;
une couche de mousse à cellules ouvertes (80) ayant un premier côté et un deuxième côté, la première grille de fils électriquement conductrice étant disposée sur le premier côté, la deuxième grille de fils électriquement conductrice étant disposée sur le deuxième côté, la couche de mousse à cellules ouvertes a une épaisseur prédéterminée pour permettre à au moins une partie de liquide en contact avec la couche de mousse à cellules ouvertes de migrer du premier côté vers le deuxième côté ;
un tapis isolant (90) disposé entre la deuxième grille de fils électriquement conductrice et un plateau (100), le tapis isolant étant un tapis isolant solide constitué d'un composé de caoutchouc, le plateau étant configuré pour y maintenir le tapis isolant, la couche de mousse à cellules ouvertes, et les première et deuxième grilles de fils électriquement conductrices ;
un dispositif de mesure de résistance (110) configuré pour délivrer en sortie un premier signal qui indique un niveau de résistance entre les première et deuxième grilles de fils électriquement conductrices ; et
un microprocesseur (120) configuré pour comparer une amplitude du premier signal à une valeur seuil, le microprocesseur étant en outre configuré pour délivrer en sortie un deuxième signal si la comparaison entre l'amplitude du premier signal et la valeur seuil indique que le liquide est détecté.

7. Système de détection de fuite de liquide de la revendication 6, dans lequel la comparaison entre l'amplitude du premier signal et la valeur seuil indique que le liquide est détecté si l'amplitude du premier signal est inférieure ou égale à la valeur seuil.

8. Système de liquide de détection de fuite de liquide de la revendication 6, comprenant en outre un haut-parleur électrique configuré pour émettre un son indiquant que le liquide est détecté en réponse à la réception du deuxième signal.

9. Système de détection de fuite de liquide de la revendication 6, dans lequel le microprocesseur est en outre configuré pour amener un dispositif d'affichage à afficher un premier message indiquant que le liquide est détecté si la comparaison entre l'amplitude du premier signal et la valeur seuil indique que le liquide est détecté.

10. Système de détection de fuite de liquide de la revendication 6, dans lequel la couche de mousse à cellules ouvertes est une couche de mousse de polyuréthane à cellules ouvertes.

11. Procédé de fabrication d'un bloc-batterie (10), **caractérisé en ce qu'**il comprend le fait :
de disposer un tapis isolant (90) dans un plateau (100), le tapis isolant étant un tapis isolant solide constitué d'un composé de caoutchouc ;
de disposer une première grille de fils électriquement conductrice (72) sur le tapis isolant, la première grille de fils électriquement conductrice étant constituée d'un premier métal ;
de disposer une couche de mousse à cellules ouvertes (80) sur la première grille de fils électriquement conductrice ;
de disposer une deuxième grille de fils électriquement conductrice (70) sur la couche de mousse à cellules ouvertes, la deuxième grille de fils électriquement conductrice étant constituée du premier métal, la couche de mousse à cellules ouvertes a une épaisseur prédéterminée pour permettre à au moins une partie d'un liquide en contact avec la couche de mousse à cellules ouvertes de migrer du premier côté vers le deuxième côté ;
de coupler les première et deuxième grilles de fils électriquement conductrices à un dispositif de mesure de résistance (110) configuré pour délivrer en sortie un premier signal qui indique un niveau de résistance entre les première et deuxième grilles de fils électriquement conductrices ; et
de disposer au moins un module de batterie sur la première grille de fils électriquement conductrice, l'au moins un module de batterie étant configuré pour y recevoir un liquide afin de refroidir le module de batterie.

12. Procédé de la revendication 11, comprenant en outre le fait de coupler un microprocesseur au dispositif de mesure de résistance.

13. Bloc-batterie de la revendication 1, dans lequel le premier métal est du cuivre.

14. Bloc-batterie de la revendication 1, dans lequel la couche de mousse à cellules ouvertes a une forme rectangulaire et définit une superficie essentiellement égale à une superficie de chacune des première et deuxième grilles de fils électriquement conductrices.

15. Système de détection de fuite de liquide de la revendication 6, dans lequel le premier métal est du cuivre.

16. Système de détection de fuite de liquide de la revendication 6, dans lequel la couche de mousse à cellules ouvertes a une forme rectangulaire et définit une superficie essentiellement égale à une superficie de chacune des première et deuxième grilles de fils électriquement conductrices.

17. Procédé de la revendication 11, dans lequel le premier métal est du cuivre.

18. Procédé de la revendication 11, dans lequel la couche de mousse à cellules ouvertes a une forme rectangulaire et définit une superficie essentiellement égale à une superficie de chacune des première et deuxième grilles de fils électriquement conductrices.
